# EUROPEAN PATENT APPLICATION

(11) **EP 4 046 778 A1**
(43) Date of publication of application: **24.08.2022**
(21) Application number: 21157863.8
(22) Date of filing: 18.02.2021
(51) Int. Cl.: B29C 64/321, B29C 64/118, B33Y 10/00, B33Y 30/00, B22F 10/18, B22F 12/53, B65H 51/10

(54) **DEVICE AND METHOD FOR TRANSPORTING OF FILAMENT AND DEVICE FOR PRINTING THREE-DIMENSIONAL OBJECTS**

(71) Applicant: InnovatiQ GmbH + Co KG, 85622 Feldkirchen (DE)
(72) Inventor: Weinberger, Gerhard, 83093 Bad Endorf (DE)
(74) Representative: Viering, Jentschura & Partner mbB Patent- und Rechtsanwälte

(57) **Abstract**

A device and a method for transporting a filament and a device for printing a three-dimensional object in layers by fused filament fabrication are provided. The device for transporting a filament includes: a drive device (1) configured to generate a torque, a first force transmitting element (2A) and a second force transmitting element (2B), a first coupling element (8A) and a second coupling element (8B), at least an adjustment element (3), wherein the first coupling element (8A) is coupled between the at least one drive device (1) and the first force transmitting element (2A) to transmit the torque to the first force transmitting element (2A), wherein the first force transmitting element (2A) is rotatably supported on the first coupling element (8A), wherein the second coupling element (8B) is coupled between the at least one drive device (1) and the second force transmitting element (2B) to transmit the torque to the second force transmitting element (2B), wherein the second force transmitting element (2B) is rotatably supported on the second coupling element (8B), wherein the first coupling element (8A) and the second coupling element (8B) are positioned relative to each other that the filament (4) can be moved by and between the first coupling element (8A) and the second coupling element (8B), wherein the adjustment element (3) is configured to adjust the position between the first coupling element (8A) and the second coupling element (8B) to adjust a force (F) applied to the filament (4) when moved between the first coupling element (8A) and the second coupling element (8B).

## Description

Various examples relate generally to a device and a method for transporting of filament and to a device for printing three-dimensional objects. Further, various examples relate to a dual drive filament system for extrusion type additive manufacturing techniques which may include for example fused filament fabrication (FFF) or fused deposition modeling (FDM) to make three-dimensional printing objects.

In a conventional FFF-device for printing three-dimensional objects, the printing velocity is usually limited by the transporting of a consumable, e.g., of a starting material, e.g., of a filament. The limitation of a transport velocity of a filament may be especially high when using soft or smooth materials. A filament, which is transported by a conventional device usually has a drive unit for driving the filament on one side of the filament and a bearing on the other side of the filament and may cause that a filament is not steadily transported by a transport device and through the transport device. The filament may not be synchronously transported by a filament feeding device. Further, using a conventional device, it is impossible to variably adjust a contact pressure on a filament. Further, as pressure acting on the filament cannot be limited to a predetermined value, the transported filament may be crushed by a transport unit, e.g. in case the material of the transported filament is soft or smooth. Soft materials may be flattened and/or crushed and a minimal cross section area of a transported filament cannot be reliably guaranteed. A minimum distance of transport pulleys to transport a filament in such a conventional device cannot be adjusted or set. Thus, when the filament is transported by using a high contact pressure on the filament, it may lead to destructing, e.g., breaking, tearing up, disrupting etc., of the filament.

In various embodiments, a device is provided that may allow an approximately synchronous or synchronous transport of at least one filament. A device may be provided that may allow a predetermined variable contact pressure on at least two (e.g. approximately opposite) sides of at least one filament. A device may be provided that may allow determining and adjusting of at least a predetermined minimal outlet cross section area or minimum width of the filament. In various embodiments, a device is provided that may allow a synchronous transport of a filament and a predetermined variable contact pressure on both sides of the filament and a predetermined minimal outlet section or width or diameter of a filament. At least one transport device may rapidly transport a soft or smooth filament such that a fast transporting velocity of filament may be provided and finally a high printing velocity may be provided by a device for printing three-dimensional objects. In various embodiments, a dual drive filament device may be provided having a high printing velocity for soft FFF materials.

A contact pressure to a filament in a conventional device cannot be evenly set to a filament from at least two sides of a filament using pulleys, which are driven synchronously by a single drive unit, and it is impossible in a conventional device to avoid damage to the filament due to high pressure while transporting the filament.

In various embodiments, a device is provided that may include a drive device configured to generate a torque, a first force transmitting element and a second force transmitting element, a first coupling element and a second coupling element, at least an adjustment element. The first coupling element may be coupled between the at least one drive device and the first force transmitting element to transmit the torque to the first force transmitting element. The first force transmitting element may be rotatably supported on the first coupling element. The second coupling element may be coupled between the at least one drive device and the second force transmitting element to transmit the torque to the second force transmitting element. The second force transmitting element may be rotatable supported on the second coupling element. The first coupling element and the second coupling element may be positioned relative to each other that the filament may be moved by and between the first coupling element and the second coupling element. The adjustment element may be configured to adjust the position between the first coupling element and the second coupling element to adjust a force applied to the filament when moved between the first coupling element and the second coupling element.

In various embodiments, the first force transmitting element and the second transmitting element may each include at least gear. Each of the first force transmitting element and the second transmitting element may further include at least a pulley. The gear and the pulley may be mechanically coupled, e.g., firmly attached, form-locking and/or force-locking. The gear and the pulley are constructed as a single piece. In other words, the gear and the pulley may be coupled such that when the gear is rotated in a predetermined direction and a predetermined angle, e.g. 10 degrees clockwise, the pulley is rotated in the same direction an angle, e.g., 10 degrees clockwise, and vice versa. In various embodiments, the gear may include a diameter, which may be smaller than the diameter of the pulley. A first pulley of a first force transmitting device may have a diameter approximately equal, e.g. equal, to a diameter of a second pulley of a second force transmitting device. A first gear of a first force transmitting device may have a diameter approximately equal, e.g. equal, to a diameter of a second gear of a second force transmitting device. Each force transmitting device may be coupled to a respective coupling element by at least an axis. At least an axis may be fixedly mounted on a position on the respective coupling element. In various embodiments, the force transmitting device is rotatable around a respective axis. A force transmitting device may be coupled to a coupling element by, e.g., a ball bearing or a plain bearing. Each of the force transmitting devices may interfere with and/or be driven by a drive gear. Each coupling element may be mounted to a respective axis and may be rotatable around the respective axis. The drive device may be coupled to a first gear, e.g. a drive pinion, a driving gear, and the first gear may engage with a first one of the force transmitting devices, e.g. with a gear of the respective force transmitting device. The first gear may engage with a second gear, which may engage with a second one of the force transmitting devices, e.g. with a gear of the respective force transmitting device. The first and second gears may include approximately equal, e.g. equal, diameters. The first and second force transmitting devices may include approximately equal, e.g. equal, diameters. When driven by the first gear, the first and second force transmitting devices rotate by an approximately equal, e.g. equal, rotation speed. The first and second force transmitting devices may transport at least a filament in a direction depending on the rotation direction of the first gear. A force or pressure may be applied to the at least one filament by using the first and second force transmitting devices, e.g. by applying a force to each of the coupling devices, which may be configured to transmit via the axis the force to the force transmitting devices, which may be configured to transmit the force to the filament. In various embodiments, the force transmitting devices may apply a force or pressure to the filament from two sides, e.g. positioned on a plane. In other words, the forces generated by the force transmitting devices applied to the filament may be positioned, e.g., on a single line and may have opposite directions. The force transmitting devices may transmit a torque to a translational movement by a predetermined velocity of the at least one filament. The force transmitting devices may each be driven by a separate motor, e.g., a stepper motor or servomotor or any other suitable drive structure. A material of the force transmitting devices and/or a material of the coupling elements may be metal, e.g. aluminum. However, according to various embodiments, any other material having the same or equal mechanical characterization may be used instead. A material of a spring may be spring steel. A material of the first gear and/or the second gear may be metal, e.g. aluminum. A material of the adjustment element may be metal, e.g. aluminum. The adjustment element may be a screw or a nut. Aa material of the nut and/or the screw and/or the thread and/or the force applying element and/or the adjustable limitation element may be metal, e.g. aluminum. The material of the filament may be soft such that the filament is plastically deformable when at least a force is applied to the filament. Two gears may interact with a drive gear, e.g. a pinion. The device may provide an adjustment option to manually adjust at least a force applied to the filament by an adjustment element. The device may provide an adjustment option to manually adjust and/or limit at least a force or pressure applied to the filament. The device may provide an option to mechanically limit an applied force to the filament to a minimal predetermined section output of a filament. In various embodiments, the output cross section area may refer to a cross sectional area of a filament while and/or after transport of the filament by the force transmitting devices, e.g. with respect to a plane orthogonal to the longitudinal axis of the filament. In various embodiments, the output cross section area may refer to a width or diameter of a filament after a transport of the force transmitting devices. In other words, a starting cross sectional area of a filament may be adjusted by the force mechanically applied to the filament by at least two force transmitting devices, e.g. a starting output cross section area before transporting may be greater as a final minimal output cross sectional area of the filament after the filament may be transported through and by the force transmitting devices. A minimal output cross section area of a filament may refer to a cross-section area that may still allow a transport of a filament by a predetermined velocity and by a predetermined force and/or pressure applied by the force transmitting devices to the filament and, e.g., a state in which the filament may not be destroyed or crushed. In other words, at least a force or pressure may be applied by the force transmitting devices to the filament while a predetermined minimal outlet cross sectional area is guaranteed such that a transport of the filament is guaranteed and the filament is not crushed or damaged. A minimal outlet cross-section area of a filament may be reached by a limitation device which acts as a counter bearing to the at least one force applied to the filament by the force transmitting devices and/or the coupling elements and/or the adjustment element.

In various embodiments, the starting material may be a material out of various printing materials which may be used for additive manufacturing based on successively forming layers by printing, e.g. thermoplastic materials, duroplastic materials, low melting point metals, and the like. Thermoplastic materials may include, for example, polyamide (e.g. aliphatic polyamide), polyethylene, acrylonitrile butadiene styrene (ABS), a polyester, e.g. polycaprolactone (PCL), polycarbonate, Polylactic Acid (PLA), Polypropylene (PP), and/or mixtures thereof, etc. A substance used as printing material may be a solid or soft or smooth filament. However, any other material for printing three-dimensional objects having the same or equal mechanical characterization may be used instead.

In various embodiments, a minimal outlet cross section area for a material ABS (Acrylonitrile Butadiene Styrene) and/or for a material PLA (Polylactic Acid) and/or a material TPU (thermoplastic PolyUrethane) may be determined in practical tests, since the determination of a minimal outlet cross section area is a complex technical field. For example, the filament may be introduced in the device for transporting the filament. In case a pressure by at least a pulley to the filament is too high, the user may change/decrease a pressure applied to the filament. In case a pressure by at least a pulley to the filament is too low, the user may change/increase a pressure applied to the filament. The procedure may be repeated until a minimal outlet cross section area may be determined.

In various embodiments, the drive device may be a motor. In various embodiments, the drive device may be a stepper motor. In various embodiments, an optimal torque generated by the motor may be determined in practical tests, since the determination of a minimal or maximal torque of a filament drive motor is a highly complex technical field.

The drive device may include a drive shaft and a pinion. The pinion may be configured to transmit the torque to the first force transmitting device and to transmit the torque to the second force transmitting device respectively. The pinion may be coupled to the drive shaft by a fixation element, e.g. a screw, grub screw, or a counter nut.

The drive device may be in a physical structure spatially positioned between the first and second force transmitting devices such that the two force transmitting devices may be coupled with each other via the drive device. A driving shaft of a drive device may not be concentric in respect to at least a first force transmitting device and/or at least a second force transmitting device.

Each of the force transmitting devices may include at least one gear. A gear of at least a first or second force transmitting device may roll off a pinion positioned on a drive shaft of a drive device.

The adjustment element may be further configured to generate via the force transmitting devices a predefined contact pressure on the filament. The adjustment element may be manually adjusted by a user. The adjustment element may further include an electromagnet configured to generate at least a force, which may be applied via the coupling elements to the force transmitting devices, which may apply the force to the filament. In various elements, the force generated by the adjustment element may be evenly or approximately evenly transmitted and evenly or approximately evenly applied to a filament.

In various embodiments, the adjustment element may be configured to generate the predefined contact pressure by mechanically applying a force on each of the coupling elements. The adjustment element at least includes a screw or a nut. The screw or the nut may be used by a user by manually rotating the screw or nut to adjust a force applied by the force transmitting devices to the filament.

The adjustment element may be configured to variably adjust the predefined contact pressure. A user may variable adjust the force applied to the filament by at least the force transmitting devices depending on the filament material used for transporting. In other words, a user may adjust the force applied to at least the force transmitting devices in case a hard filament material is transported by the device for transporting of a filament, and can adjust the force applied to at least the force transmitting devices in case a soft or smooth filament material is transported by the device for transporting of a filament. A user may change the predetermined pressure when the printing process is stopped. In various embodiments, a soft filament, e.g., TPU material, includes a stiffness in a range from about Shore A30 to about Shore A60. A soft filament PLA material may include a stiffness in a range from about Shore A90 to about Shore A94, e.g. Shore A92.

A user may adjust a predefined contact pressure manually by the adjustment element.

The predetermined minimal outlet section of the filament may be manually adjustable by the adjustment element. The adjustment element may be configured to allow a user to manually limit a force applied by at least the force transmitting devices to a filament and generated by at least the adjustment elements to a value, which corresponds to a minimal outlet cross section area depending on a material of filament. The term "minimal" may be understood herein as a parameter of a cross section area of filament, which still allows a transport of, e.g. a soft, filament material, by the device without breaking or crushing the filament. The minimal cross section output area depends on the used filament material. The minimal output cross section area may depend on the material transported by the device, and the device may be adaptively adjusted depending on the transported material. The term "soft" or "smooth" may be understood as a material property.

The adjustment element may further include at least a nut-thread connection. The nut-thread connection may include at least a nut, a thread and a force applying element. The predefined contact pressure may be adjustable by adjusting a position of the nut, which may be configured to move along the thread, and to apply a force to the force applying element depending on the position of the nut on the thread. The force applying element may be configured to apply the force to the coupling elements. The nut may include an internal thread. The thread may include an external thread. In various embodiments, the nut may be rotatable around the thread and may be movable in a longitudinal direction of the thread. When the nut may move along the thread the nut may change its position, which may cause at last a portion of a force applying element to at least partly change its position. The nut may compress a force applying element, e.g. a spring, e.g. a coil spring and/or cup spring and/or a plate spring. The force applying element may transmit the force applied to it by the nut to at least the first and second coupling element, which transmit a force or a generated torque via at least the first and the second coupling elements to at least the first and the second force transmitting devices to a filament. Each of the first and second coupling elements may include at least two lever arms. Each lever arm may be used to transmit a force generated by an adjustment element to a respective force transmitting device. The first and second coupling elements may include the same shape. Each coupling element may be rotatable mounted to a respective axis. The respective axis may be the center of rotation of the coupling element. A center of rotation of at least one coupling element, e.g. arm, may be or may correspond to a drive shaft of the drive device and/or a shaft of a pinion. A center of rotation of at least a coupling element may be or may correspond to a rotation axis of a gear, configured to interact with at least a pinion and a first or second force transmitting device.

The adjustment element may further include an adjustable limitation element configured to limit the position between the first coupling element and the second coupling element to limit a force applied to the filament when moved between the first coupling element and the second coupling element. The limitation element may be a nut or a screw and may be a mechanical stop element configured to apply a force evenly to the coupling element such that the coupling element may not be moved further together when transporting a filament. The limitation element may be a nut movable along a thread as a mechanical stop element.

The force applying element may be a coil spring and/or a plate spring. The nut-thread connection may further include a further coupling element configured to transmit the force from the force applying element to the coupling elements. The further coupling element may be coupled to a thread and movable along a longitudinal axis of the thread. The coupling element may be in contact with at least one of an adjustment element, a force applying element, a limitation element, and a first and second coupling element. The coupling element may transmit a force generated by at least an adjustment element and/or force applying element to at least a first and second coupling elements. The first and second coupling elements and the further coupling element may be in contact with each other to transmit a force, e.g., by a partial portion of their surfaces using friction in a detachable connection. The adjustment element may be coupled with the first and second coupling elements by a spring and/or a further coupling element.

In various embodiments, the adjustable limitation element may be configured to be rotatable coupled to the thread and to move along the thread and to limit the contact pressure generated by the nut and the force applying element.

The adjustment element may further include an electromagnet configured to at least partially adjust the position between the first coupling element and the second coupling element to adjust a force applied to the filament when moved between the first coupling element and the second coupling element.

The device may further include a transmission configured to include at least a gearing of gears and/or at least a toothed belt to transmit the torque from the drive device to the force transmitting devices. The transmission may include a gear and at least two rolleys. Each rolley is coupled via a belt to a respective one of the force transmitting devices. A pinion and a first gear are in contact with each other and a first force transmitting device may be in contact with the pinion and a second force transmitting device may be in contact with the first gear. The pinion may transmit a torque to the first force transmitting device and the pinion may transmit a torque via the first gear to a second force transmitting device such that the first and second force transmitting devices rotate in opposite directions to each other to be able to transport the filament in a predetermined direction. The pinion may include a pulley and the pulley may be coupled via a toothed belt to a first force transmitting device. The first gear may include a pulley and the pulley may be coupled via a toothed belt to a second force transmitting device. A pinion may transmit a torque to a first gear and the pinion and the first gear are each coupled with a respective force transmitting device via a toothed belt. In various embodiments, a torque may be synchronously transmitted via the pinion and the first gear to the force transmitting devices. A torque may be synchronously transmitted via the toothed belt to the force transmitting devices. A force applied by an adjustment element to a spring may be transmitted to at least a coupling element or at least two coupling element, which transmit the force to at least two force transmitting elements, which transmit a force or pressure to a filament. The device may be configured to transport at least different filaments, e.g. in a serial way.

A device for printing a three-dimensional object in layers by fused filament fabrication is provided. The device for printing a three-dimensional object in layers may include at least a device for transporting a filament, a print bed, a filament reservoir, a print head, a first driving unit, configured to drive the print head in at least a x- and y-direction, a second driving unit, configured to drive the print bed in at least a z-direction, an energy supply device, and a controller, configured to control at least one of the device, the first driving unit and the second driving unit. In various embodiments, a device for printing of three-dimensional objects may include a plurality of devices for transporting of a filament as described herein.

A method for transporting of filament is provided. The method may be performed by a device for transporting a filament according to various embodiments exemplarily described herein. The method may include at least: Generating a torque by using a drive device, synchronously transmitting by using the drive device the torque to two force transmitting devices such that the filament, which is in contact with the force transmitting devices, is fed in a predetermined direction, and variably adjusting by the adjustment element the position between the first coupling element and the second coupling element to adjust a force or pressure applied to the filament when moved between the first coupling element and the second coupling element. The method may further include limiting a force or pressure generated by an adjustment device and transmitted to a filament by at least a first and a second coupling element and a first and a second force transmitting device on a filament by a limitation device. The method may further include manually adjusting a pressure depending on at least a stiffness of a filament to a predetermined value. The method may further include limiting the pressure by a manually adjustable limitation element such that at least a predetermined minimal cross section area of a filament is determined or reached depending on at least a stiffness of a used filament. The method may further include adjusting a predetermined pressure on a filament by an adjustment element and/or a force applying element while a printing process using a device for printing three-dimensional objects or while the printing process is stopped. The method may further include adjusting a minimal cross sectional area of a filament by a limitation element while a printing process or while a printing process is stopped using a device for printing three-dimensional objects.

Each of the force transmitting devices may include a pulley. Each pulley may be configured to be fixedly coupled to a respective gear. The pulleys are in contact with the filament.

The force transmitting devices may face each other in respect to a longitudinal axis of the filament and are positioned in a plane.

The pinion may be positioned on the single drive shaft. The transmission may include a first gear configured to be in interlocking contact with the pinion and with at least a first one of the force transmitting devices to transmit the torque from the drive device to the first one of the force transmitting devices. The pinion may be configured to be in interlocking contact with a second on of the force transmitting devices to transmit the torque from the drive device to the second on of the force transmitting devices.

In various embodiments, the coupling elements may be arms.

Each of the force transmitting devices may be pivotably supported by an arm. Each of the arms may be pivotably supported by a fixed axis as a rotation axis. When the arms may be moved by a force applied by the adjustment element, the arms are configured to move the force transmitting devices closer to a filament or further away from the filament.

The adjustment element may include a mechanical spring and/or an electromagnet. The adjustment element may be configured to subject at least a portion of each coupling element, e.g. each arm, e.g. each upper portion of each arm, to a predefined force or load, such that the variable contact pressure to the filament may be generated.

The adjustment element may include a variably adjustable mechanical stop element. The mechanical stop element may be configured to precisely adjust, determine and limit the outlet cross section to a predefined minimal outlet cross section of the filament.

In various embodiments, the device may be an extruder of a device for printing three-dimensional objects in layers using at least a start material, e.g. a filament.

In various embodiments, the filament may include a diameter in a range from about 1,5 mm to about 2 mm, preferably about 1,75 mm.

In various embodiments, the filament may include a diameter in a range from about 2,5 mm to about 3 mm, preferably about 2,85 mm.

In various embodiments, a suitable contact pressure may be determined by a user of the device in practical tests.

The drive device may be a motor, whose rotation speed may be variably adjustable by at least a controller.

The drive device may be a motor, which is drivable clockwise and counter clockwise.

Each feature of an embodiment may be combined with at least another feature of another embodiment. Each effect described herein with respect to the device for transporting of a filament may also refer to the device for printing three-dimensional objects and vice versa.

As used in this specification and claim(s), the words "comprising" (and any form of comprising, such as "include" and "includes"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

All of the devices and/or methods disclosed and claimed herein can be made and executed without undue experimentation in light of the present disclosure. While the devices and methods of this invention have been described in terms of embodiments, it will be apparent to those skilled in the art that variations may be applied to the compositions and/or methods and in the steps or in the sequence of steps of the method described herein without departing from the concept, spirit and scope of the invention. All such similar substitutes and modifications apparent to those skilled in the art are deemed to be within the spirit, scope and concept of the invention as defined by the appended claims.

It will be understood that particular embodiments described herein are shown by way of illustration and not as limitations of the invention. The principal features of this invention can be employed in various embodiments without departing from the scope of the invention. Those skilled in the art will recognize, or be able to ascertain using no more than routine experimentation, numerous equivalents to the specific procedures described herein. Such equivalents are considered to be within the scope of this invention and are covered by the claims.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

The phrase "at least one of" with regard to a group of elements (for example at least one of A and B, or in the same way, at least one of A or B) may be used herein to mean at least one element from the group consisting of the elements, i.e. the logical and/or. For example, the phrase "at least one of" with regard to a group of elements may be used herein to mean a selection of: one of the listed elements, a plurality of one of the listed elements, a plurality of individual listed elements, or a plurality of a multiple of listed elements. The term "coupled" is used herein to mean, for example, communicatively coupled, which may include type of a direct connection or an indirect connection. The may include any suitable wired connection and/or wireless connection.

A "controller" (or equivalently "processing circuitry" or "processing circuit") as used herein is understood as referring to any circuit that performs an operation(s) on signal(s), such as, for example, any circuit that performs processing on an electrical signal or an optical signal. A processing circuit may thus refer to any analog or digital circuitry that alters a characteristic or property of an electrical or optical signal, which may include analog and/or digital data. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (for example a processor or microprocessor). As utilized herein, "digital processing circuit(ry)" may refer to a circuit implemented using digital logic that performs processing on a signal, for example, an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single a processing circuit may be equivalently split into two separate processing circuits, and conversely that two separate processing circuits may be combined into a single equivalent processing circuit.

In the drawings, like reference characters generally refer to the same parts throughout the different views. The use of the same reference numbers in different figures indicates similar or identical items or features. The drawings are not necessarily to scale, emphasis instead generally being placed upon illustrating the principles of the invention.

In the following description, various examples of the invention are described with reference to the following drawings, in which:
FIG. 1 shows a device 100 for transporting of a filament in schematic views, according to various examples.
FIG. 2 shows a device 200 for transporting of a filament in schematic views, according to various examples.
FIG. 3 shows a device 1000 for transporting of a filament in schematic views, according to various examples.

The skilled in the art will recognize that the examples are not limited to the examples or drawings described. It should be understood that the drawings and detailed description thereto are not intended to limit examples to the particular form disclosed, but on the contrary, the intention is to cover all modifications, equivalents and alternatives falling within the spirit and scope as defined by the appended claims. The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Further, it is obvious, that each element of a list including a plurality of elements is also to be considered to be disclosed in combination with any further element of a further list.

The following detailed description refers to the accompanying drawings that show, by way of illustration, specific details and examples in which the invention may be practiced. These examples are described in sufficient detail to enable those skilled in the art to practice the invention. Other examples may be utilized and structural, logical, and electrical changes may be made without departing from the scope of the invention. The various examples are not necessarily mutually exclusive, as some examples can be combined with one or more other examples to form new examples. Various examples are described in connection with methods and various examples are described in connection with devices. However, it may be understood that examples described in connection with methods may similarly apply to the devices, and vice versa.

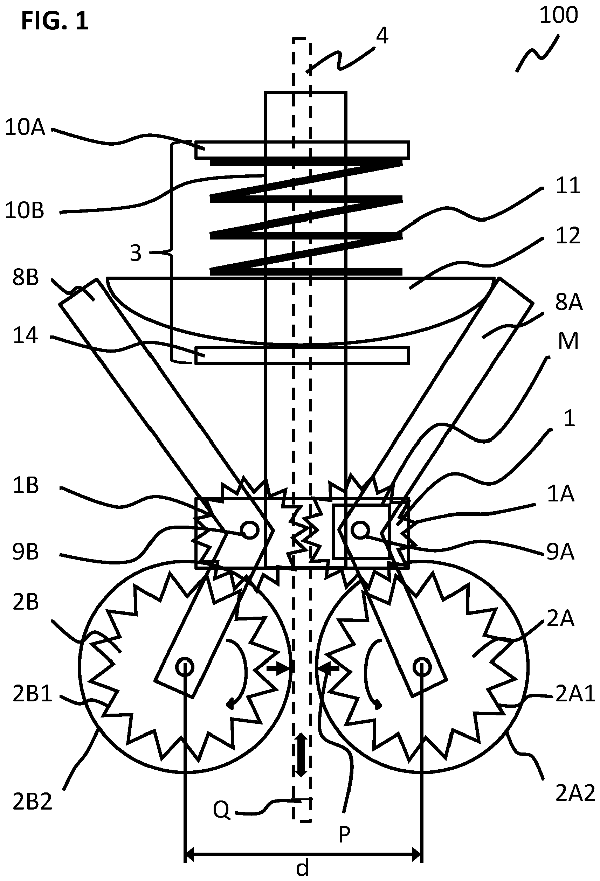

FIG. 1 shows a device 100 for transporting of a filament 4 in a schematic view, according to various examples.

The device 100 may include a drive device 1, e.g. an electric motor M, e.g. a stepper motor, which may be configured to drive and transmit a torque via a gear, e.g., a pinion 1A, to a first force transmitting device 2A. The rotation axis of the pinion 1A may be concentric to a drive shaft 9A of the drive device 1. The first transmission device 2A may include a first gear 2A1 and a first pulley 2A2. The pinion 1A may transmit the torque to a first gear 2A1 of the first force transmitting device 2A. The first force transmitting device 2A may further include a pulley 2A2 configured to be in contact and to transport a filament 4 from a first side. The pinion 1A may interact with the first gear 2A1 of the first force transmitting device 2A. The device 100 may further include a first coupling element 8A, e.g., a first arm. The first coupling element 8A may include two lever arms and a rotation center. The force transmitting device 2A may be rotatable mounted on the first coupling element 8A. The first force transmitting device 2A may be rotatable mounted on the first coupling element 8A such, that a rotation axis of the first force transmitting device 2A is concentric to a fixed center of rotation fixed on a portion of the first coupling element 8A. The first force transmitting device 2A may be rotatable around a first axis, which may be fixed on the first coupling element 8A. A rotation axis of the first coupling element 8A may be concentric to a first rotation axis, e.g. the drive shaft 9A of the drive device 1 and/or the pinion 1A. The device 100 may further include a second gear 1B, which may be in contact with the pinion 1A and may be configured to rotate around a second rotation axis 9B. The pinion 1A may be configured to transmit a torque to the second gear 1B. The second gear 1B may transmit the torque to a second gear 2B1 of the second force transmitting device 2B. The second force transmitting device 2B may further include a pulley 2B2 configured to be in contact with and to transport a filament 4 from a second side. The second gear 1B may interact with the second gear 2B1 of the second force transmitting device 2B. The device 100 may further include a second coupling element 8B. The second coupling element 8B may include two lever arms. The second force transmitting device 2B may be rotatable mounted on the second coupling element 8B. The second force transmitting device 2B may be rotatable mounted on the second coupling element 8B such, that a rotation axis of the second force transmitting device 2B is concentric to a fixed center of rotation fixed on the second coupling element 8B. The second force transmitting device 2B may be rotatable around a second axis, which may be fixed on the second coupling element 8B. A rotation axis of the second coupling element 8B may be concentric to a second rotation axis 9B of the second gear 1B. The first gear 2A1 and the first pulley 2A2 of the first force transmitting device 2A may be flange-mounted or may be coupled by at least a fixed connection or may be of a single part. The second gear 2B1 and the second pulley 2B2 of the second force transmitting device 2B may be flange-mounted or may be coupled by at least a fixed connection or may be of a single part. The first and second coupling elements 8A and 8B are movable to each other such that a distance d of the first and second force transmitting devices 2A and 2B may vary. The first and second force transmitting devices 2A and 2B may apply a force or a pressure P, e.g. from two sides, to the filament 4, as can be schematically seen from FIG. 1. A predetermined variable pressure P, applied to the filament 4 by the force transmitting devices 2A, 2B when transported by the first and second force transmitting devices 2A and 2B, may be adjusted at least by an adjustment element 3. The adjustment element 3 may include at least a nut 10A, which may be rotatable around a thread 10B. The thread 10B may be an outer thread. The nut 10A may be in contact with the tread 10B and a force applying element 11. In case the nut 10A may move up or down, the nut 10A may change it position in respect to at least the thread 10B. The nut 10A may be configured to apply by its movement along a longitudinal direction of the thread 10B a force to the force applying element 11, which may be a spring, e.g. a coil spring and/or a plate spring. The force applying element 11 may be positioned around the thread 10B. The force applying element 11 may be compressed by the nut 10A and ,e.g., a coupling element 12. The force applying element 11 may transmit the force to a further coupling element 12. The coupling element 12 may have a rotationally symmetric body, and may include, e.g., a disc-like shape or may include at least two arms. The coupling element 12 may transmit the force to the first coupling element 8A and the second coupling element 8B and the coupling elements 8A and 8B may transmit the force to the force transmitting devices 2A and 2B. The force is applied from the force transmitting devices 2A and 2B by a variable pressure P to the filament 4. Illustratively, the device for transporting of a filament 4 may be configured to adjust the pressure P applied to the filament 4 by, e.g. manually adjusting the force applied by the nut 10A. The device 100 may further include an adjustable limitation device 14 configured to limit a pressure P applied by the nut 10A to the filament 4. The adjustable limitation device 14 may be part of the adjustment element 3. In a case soft or smooth filament materials are used in the device 100 for transporting of a filament 4 it may be required to limit a force or pressure P on the soft filament 4. The adjustable limitation device 14 may act as a counter bearing to the force applied by the nut 10A. The adjustable limitation device 14 may include a shape of a nut, which may be positioned on the thread 10B and which may be movable along a longitudinal axis of the tread 10B. The adjustable limitation element 14 may be manually adjustable and may be positioned on the thread 10B such that the limitation element 14 may restrict a further movement of the first and second coupling elements 8A and 8B. The limitation of the force applied by the nut 10A may be limited and a soft or smooth filament may not be crushed. The device 100 may be configured to synchronously apply an adjustable pressure P to a filament 4, e.g., by the nut 10A and/or a force applying element 11, and to guarantee an adjustable minimal cross section area Q of the filament 4 by a limitation element 11 and by using a single drive device, e.g. an electric motor M. The device 100 may be part of a device for printing of a three-dimensional object and may be positioned between a filament reservoir and a print head and/or a hot end. The device 100 may provide a transport of, e.g. soft or smooth, filament materials by a high speed and may provide a high printing speed. The device 100 may further include a single motor, which saves costs. A user may adjust by the device 100 a predetermined pressure P on a filament 4 manually and a user may manually adjust a predetermined minimal outlet cross section area Q of the filament 4 depending on a material property, e.g. a stiffness of a filament material.

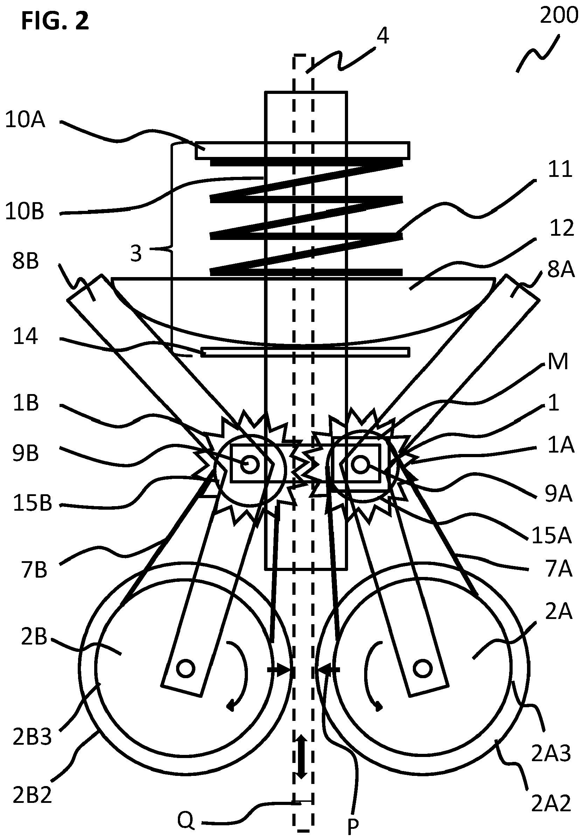

FIG. 2 shows a device 200 for transporting of filament 4 in a schematic view, according to various examples. The device 200 exemplary illustrated in FIG. 2 may include similar features to the device 100 described exemplary to FIG. 1, however, the device 200 includes at last two belts 7A, 7B to transmit a torque generated by the drive device 1 to the first and second force transmitting devices 2A and 2B. As can be illustratively seen in FIG. 2 the pinion 1A includes at least a first pulley 15A coupled to the pinion 1A. The second gear 1B, which may be in contact with and driven by the pinion 1A, may include at least a second pulley 15B. The first pulley 15A may be concentric to the first gear or pinion 1A and the first rotation axis or drive shaft 9A and may be coupled to the first gear or drive shaft 1B and/or the first rotation axis 9A. The second pulley 15B may be concentric to the second gear 1B and the second rotation axis 9B and may be coupled to the second gear 1B and/or the second rotation axis 9B. The pinion 1A may transmit a torque to the first pulley 15A and the first pulley 15A may transmit the torque to a first pulley 2A3 of the first force transmitting device 2A. The second gear 1B may transmit the torque transmitted from the pinion 1A to the second pulley 15B and the second pulley 15B may transmit the torque to a second pulley 2B3 of the second force transmitting device 2B. The belts may be toothed belts 7a, 7b and the pulleys 15A, 2A3, 15B, and 2B3 may be respectively toothed to transport the toothed belts 7a, 7b to transmit the respective torque. The device 200 may provide a transport of, e.g., soft or smooth, filament materials by a high speed and may provide a high printing speed. The device 200 may further include a single motor, which saves costs. A user may adjust by the device 200 a predetermined pressure P on a filament 4 manually and a user may manually adjust a predetermined minimal outlet cross section area Q of the filament 4 depending on a material property, e.g. a stiffness of a filament material.

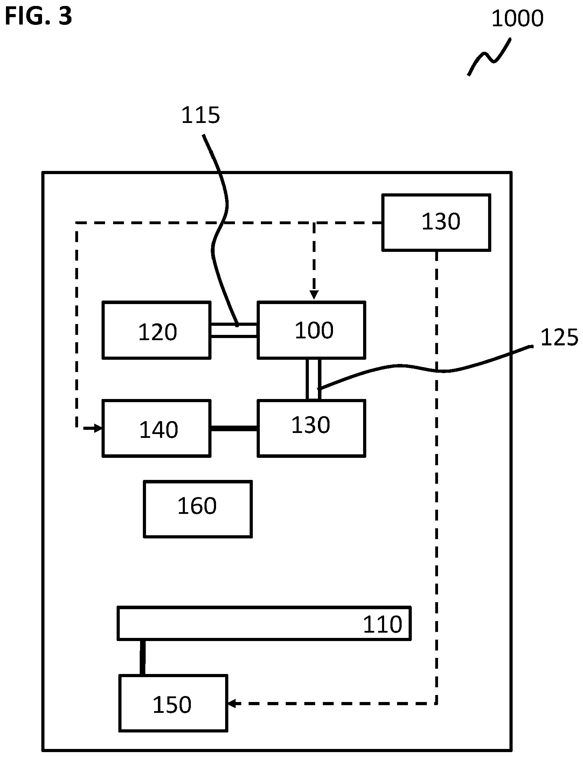

FIG. 3 shows a device 1000 for printing three-dimensional objects for transporting of filament 4 in a schematic view, according to various examples. The device 1000 illustratively shown in FIG. 3 may include at least a device 100 or 200, or a plurality of at least devices 100 or 200 for transporting of a filament as described herein, a print bed 110, a filament reservoir 120, a print head 130, a first driving unit 140, configured to drive the print head 130 in at least a x- and y-direction, a second driving unit 150, configured to drive the print bed 110 in at least a z-direction, an energy supply device 160, and a controller 130, configured to control at least one of the device 100, the first driving unit 140 and the second driving unit 150.

The features mentioned above in conjunction with exemplary or specific examples may also be applied to further examples mentioned above and vice versa. Further, advantages mentioned in relation to the devices may also refer to the method and vice versa.

In the following, various examples are provided with reference to the FIGS. 1 to 3 and examples described above.

Example 1 is a device for transporting of a filament, including: a drive device configured to generate a torque, a first force transmitting element and a second force transmitting element, a first coupling element and a second coupling element, at least an adjustment element, wherein the first coupling element is coupled between the at least one drive device and the first force transmitting element to transmit the torque to the first force transmitting element. The first force transmitting element is rotatably supported on the first coupling element. The second coupling element is coupled between the at least one drive device and the second force transmitting element to transmit the torque to the second force transmitting element. The second force transmitting element is rotatably supported on the second coupling element. The first coupling element and the second coupling element are positioned relative to each other that the filament can be moved by and between the first coupling element and the second coupling element. The adjustment element is configured to adjust the position between the first coupling element and the second coupling element to adjust a force applied to the filament when moved between the first coupling element and the second coupling element.

In Example 2, the device of Example 1 may optionally include that the drive device is a motor.

In Example 3, the device of Example 1 may optionally include that the drive device includes a drive shaft and a pinion, wherein the pinion is configured to transmit the torque to the first force transmitting device and to transmit the torque to the second force transmitting device respectively.

In Example 4, the device of Examples 1 to 3 may optionally include that the drive device is in a physical structure spatially positioned between the first and second force transmitting devices such that the two force transmitting devices are coupled with each other via the drive device.

In Example 5, the device of Examples 1 to 4 may optionally include that each of the force transmitting devices includes at least a gear.

In Example 6, the device of Examples 1 to 5 may optionally include that the adjustment element is further configured to generate via the force transmitting devices a predefined contact pressure on the filament.

In Example 7, the device of Examples 1 to 6 may optionally include that the adjustment element is configured to generate the predefined contact pressure by mechanically applying a force on each of the coupling elements.

In Example 8, the device of Examples 1 to 7 may optionally include that the adjustment element is configured to variably adjust the predefined contact pressure.

In Example 9, the device of Examples 6 to 8 may optionally include that the predefined contact pressure is manually adjustable by the adjustment element.

In Example 10, the device of Examples 1 to 9 may optionally include that a predetermined minimal outlet section of the filament is manually adjustable by the adjustment element.

In Example 11, the device of Examples 1 to 10 may optionally include that the adjustment element further includes at least a nut-thread connection. The nut-thread connection includes at least a nut, a thread and a force applying element. The predefined contact pressure is adjustable by adjusting a position of the nut, which is configured to move along the thread, and to apply a force to the force applying element depending on the position of the nut on the thread. The force applying element is configured to apply the force to the coupling elements.

In Example 12, the device of Examples 1 to 11 may optionally include that the adjustment element further includes an adjustable limitation element configured to limit the position between the first coupling element and the second coupling element to limit a force applied to the filament when moved between the first coupling element and the second coupling element.

In Example 13, the device of Examples 11 to 12 may optionally include that the force applying element is a coil spring and/or a plate spring, and wherein the nut-thread connection further includes a further coupling element configured to transmit the force from the force applying element to the coupling elements.

In Example 14, the device of Examples 12 to 13 may optionally include that the adjustable limitation element is configured to be rotatably coupled to the thread and to move along the thread and to limit the contact pressure generated by the nut and the force applying element.

In Example 15, the device of Examples 1 to 14 may optionally include that the adjustment element further includes an electromagnet configured to at least partially adjust the position between the first coupling element and the second coupling element to adjust a force applied to the filament when moved between the first coupling element and the second coupling element.

In Example 16, the device of Examples 1 to 15 may optionally include that the device further includes a transmission configured to include at least a gearing of gears and/or at least a toothed belt to transmit the torque from the drive device to the force transmitting devices.

Example 17 is a device for printing a three-dimensional object in layers by fused filament fabrication, the device for printing a three-dimensional object in layers includes at least: a device according to anyone of examples 1 to 16, a print bed, a filament reservoir, a print head, a first driving unit, configured to drive the print head in at least a x- and y-direction, a second driving unit, configured to drive the print bed in at least a z-direction, an energy supply device, and a controller, configured to control at least one of the device, the first driving unit and the second driving unit.

Example 18 is a method for transporting of a filament. The method may be performed by a device according to anyone of examples 1 to 16. The method includes generating a torque by using a drive device, synchronously transmitting by using the drive device the torque to two force transmitting devices such that the filament, which is in contact with the force transmitting devices, is fed in a predetermined direction, and variably adjusting by the adjustment element the position between the first coupling element and the second coupling element to adjust a force applied to the filament when moved between the first coupling element and the second coupling element.

While the invention has been particularly shown and described with reference to specific examples, it should be understood by those skilled in the art that various changes in form and detail may be made therein without departing from the spirit and scope of the invention as defined by the appended claims. The scope of the invention is thus indicated by the appended claims and all changes, which come within the meaning and range of equivalency of the claims, are therefore intended to be embraced.

## Claims

1. A device for transporting of filament (4), comprising:
a drive device (1) configured to generate a torque;
a first force transmitting element (2A) and a second force transmitting element (2B);
a first coupling element (8A) and a second coupling element (8B);
at least an adjustment element (3),
wherein the first coupling element (8A) is coupled between the at least one drive device (1) and the first force transmitting element (2A) to transmit the torque to the first force transmitting element (2A), wherein the first force transmitting element (2A) is rotatably supported on the first coupling element (8A);
wherein the second coupling element (8B) is coupled between the at least one drive device (1) and the second force transmitting element (2B) to transmit the torque to the second force transmitting element (2B), wherein the second force transmitting element (2B) is rotatably supported on the second coupling element (8B);
wherein the first coupling element (8A) and the second coupling element (8B) are positioned relative to each other that the filament (4) can be moved by and between the first coupling element (8A) and the second coupling element (8B);
wherein the adjustment element (3) is configured to adjust the position between the first coupling element (8A) and the second coupling element (8B) to adjust a force applied to the filament (4) when moved between the first coupling element (8A) and the second coupling element (8B).

2. The device of claim 1,
wherein the drive device (1) is a motor.

3. The device of claim 1,
wherein the drive device (1) comprises a drive shaft (9A) and a pinion (1A), wherein the pinion (1A) is configured to transmit the torque to the first force transmitting device (2A) and to transmit the torque to the second force transmitting device (2B) respectively.

4. The device of anyone of claims 1 to 3,
wherein the drive device (1) is in a physical structure spatially positioned between the first and second force transmitting devices (2A, 2B) such that the two force transmitting devices (2A, 2B) are coupled with each other via the drive device (1).

5. The device of anyone of claims 1 to 4,
wherein each of the force transmitting devices (2A, 2B) comprises at least a gear (2A1; 2B1).

6. The device of anyone of claims 1 to 5,
wherein the adjustment element (3) is further configured to generate via the force transmitting devices (2A, 2B) a predefined contact pressure (P) on the filament (4).

7. The device of anyone of claims 1 to 6,
wherein the adjustment element (3) is configured to generate the predefined contact pressure (P) by mechanically applying a force on each of the coupling elements (8A, 8B).

8. The device of anyone of claims 1 to 7,
wherein the adjustment element (3) is configured to variably adjust the predefined contact pressure (P).

9. The device of anyone of claims 6 to 8,
wherein the predefined contact pressure (P) is manually adjustable by the adjustment element (3).

10. The device of anyone of claims 1 to 9,
wherein a predetermined minimal outlet section (Q) of the filament (4) is manually adjustable by the adjustment element (3).

11. The device of anyone of claims 1 to 10,
wherein the adjustment element (3) further comprises at least a nut-thread connection (10A, 10B, 11),
wherein the nut-thread connection (10A, 10B, 11) comprises at least a nut (10A), a thread (10B) and a force applying element (11),
wherein the predefined contact pressure (P) is adjustable by adjusting a position of the nut (10A), which is configured to move along the thread (10B), and to apply a force to the force applying element (11) depending on the position of the nut (10A) on the thread (10B), and
wherein the force applying element (11) is configured to apply the force to the coupling elements (8A, 8B).

12. The device of anyone of claims 1 to 11,
wherein the adjustment element (3) further comprises an adjustable limitation element (14) configured to limit the position between the first coupling element (8A) and the second coupling element (8B) to limit a force (F) applied to the filament (4) when moved between the first coupling element (8A) and the second coupling element (8B).

13. The device of anyone of claims 11 or 12,
wherein the force applying element (11) is a coil spring and/or a plate spring, and
wherein the nut-thread connection (10A, 10B, 11) further comprises a further coupling element (12) configured to transmit the force from the force applying element (11) to the coupling elements (8A, 8B).

14. A device for printing a three-dimensional object in layers by fused filament fabrication, the device for printing a three-dimensional object in layers (1000) comprises at least:
a device (100) of anyone of claims 1 to 13;
a print bed (110);
a filament reservoir (120);
a print head (140);
a first driving unit (150), configured to drive the print head (140) in at least a x- and y-direction;
a second driving unit (160), configured to drive the print bed (110) in at least a z-direction;
an energy supply device (170); and
a controller (130), configured to control at least one of the device (100), the first driving unit (150) and the second driving unit (160).

15. A method for transporting of filament (4), performed by a device of anyone of claim 1 to 13, the method comprising:
generating a torque by using a drive device (S1);
synchronously transmitting by using the drive device the torque to two force transmitting devices such that the filament, which is in contact with the force transmitting devices, is fed in a predetermined direction (S2); and
variably adjusting by the adjustment element the position between the first coupling element and the second coupling element to adjust a force applied to the filament when moved between the first coupling element and the second coupling element.
